# EUROPÄISCHE PATENTSCHRIFT

(11) **EP 1 415 525 B1**
(45) Veröffentlichungstag und Bekanntmachung des Hinweises auf die Patenterteilung: **17.05.2006**
(21) Anmeldenummer: 03024775.3
(22) Anmeldetag: 30.10.2003
(51) Int. Cl.: A01D 34/73

(54) **Trenneinrichtung**
Cutting device
Dispositif de coupe

(30) Priorität: 01.11.2002 US 285864
(43) Veröffentlichungstag der Anmeldung: 06.05.2004
(73) Patentinhaber: DEERE & COMPANY, Moline Illinois 61265-8098 (US)
(72) Erfinder: Arfstrom, Jack Edward, Rubicon, WI 53078 (US); Hopkins, John William, Charlotte, NC28210 (US); Pahl, David James, Charlotte, NC 28277 (US)
(74) Vertreter: Holst, Sönke

(56) Entgegenhaltungen:
- EP-A- 0 280 393
- DE-U- 29 900 270
- US-A- 3 398 517
- US-A- 4 265 018

## Beschreibung

Die Erfindung betrifft eine Trenneinrichtung mit einem Korpus, welcher zumindest einen Anschlussbereich und einen Schneidbereich aufweist, wobei zwischen dem Schneidbereich und dem Anschlussbereich ein Verformungsbereich vorgesehen ist.

Handgeführte bzw. handgeschobene Rasenmäher, Rasentraktoren, Aufsitzmäher und andere Geräte zur Rasen-, Garten- bzw. Grundstückspflege weisen häufig Trenneinrichtungen bzw. Messerbalken auf, welche mit verhältnismäßig hoher Geschwindigkeit rotieren, um Gras und anderes Material zu schneiden. Im Einsatz kann es vorkommen, dass eine Bedienperson das Gerät derart bewegt, dass es auf Hindernisse wie Pfosten, Leitungen, Steine oder andere Objekte trifft. Wenn dies passiert, kann der Aufschlag der getroffenen Objekte die Trenneinrichtungen wie auch einen Antrieb bzw. ein Getriebe des Geräte beschädigen. Derartige Beschädigungen können die Geräte unbrauchbar und teure Reparaturen erforderlich machen. In manchen Fällen ist ein Ersetzen des gesamten Geräts notwendig.

Die US-A-4,594,843 zeigt eine Trenneinrichtung in der Art eines Messerbalkens, welche einen steifen Korpus aufweist, an dem mit Abstand von einer Antriebswelle Messerelemente vorgesehen sind. Die Messerelemente sind mit dem Körper jeweils mittels einer Schraube verbunden. Darüber hinaus weisen die Messerelemente einen Vorsprung auf, welcher in eine Kerbe in dem Korpus eingreift. Wenn ein jeweiliges Messerelement auf ein Hindernis trifft, wirkt auf das Messerelement ein Moment, durch welches es um die Schraube gegen die Wirkung des Vorsprungs drehen will. Übersteigt das Moment einen vorgegebenen Wert, so verformt sich der Vorsprung und wird aus der Kerbe herausgedrückt.

Die gattungsgemäße DE-U-299 00 270 zeigt ein Messerblatt für ein Freischneidegerät, welches sich bei einem Auftreffen seiner Flügelenden auf ein Hindernis verformen kann.

Das der Erfindung zugrunde liegende Problem wird darin gesehen, dass derartige Trenneinrichtungen häufig überprüft werden müssen, um sicherzustellen, dass die Messerelemente fest mit dem Korpus der Trenneinrichtung verbunden sind.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Trenneinrichtung mit einem Verformungsbereich zur Verfügung gestellt, der im Falle eines Auftreffens der Trenneinrichtung auf ein Hindernis die Gefahr einer Beschädigung eines Antriebs bzw. eines einen Antrieb mit der Trenneinrichtung verbindenden Getriebes verringert, indem er den Stoss absorbiert. Der Verformungsbereich ist derart ausgebildet, dass er sich verformt, wenn die Trenneinrichtung belastet bzw. wenn eine vorgegebenen Belastung der Trenneinrichtung überschritten wird. Hierzu ist es vorgesehen, dass die Breite des Korpus sich von der Breite des Anschlussbereichs auf eine minimale Breite des Verformungsbereichs verjüngt, um sich dann auf die Breite des Schneidbereichs zu erweitern. Darüber hinaus kann vorgesehen sein, dass der Verformungsbereich abgewinkelt oder rampenartig ausgebildet ist, wobei er sich von einer vorzugsweise oberen Ebene des Anschlussbereichs zu einer vorzugsweise unteren Ebene des Schneidbereichs erstreckt.

Dies wird dadurch erreicht, dass der Verformungsbereich die durch das Auftreffen in die Trenneinrichtung eingeleitete Energie ableitet bzw. in dem Korpus verteilt.

Bei der Trenneinrichtung kann es sich um einen Messerbalken oder jede andere Art von Messer, Schneideinrichtung oder Klinge bzw. Blatt handeln, welche zum Mähen, Trimmen, Bewegen oder anderweitig Behandeln, beispielsweise von Gras, geeignet ist bzw. die Trenneinrichtung kann einen solchen/ein solches aufweisen.

Die Trenneinrichtung ist vorzugsweise einteilig ausgebildet; es ist aber auch eine zwei- oder mehrteilige Ausführung möglich. Die Trenneinrichtung weist zumindest einen Anschlussbereich, über den die Trenneinrichtung mit einem Antrieb bzw. einem Getriebe verbunden werden kann, und einen oder mehrere Schneidbereiche auf. Der Verformungsbereich ist zwischen dem wenigstens einen Schneidbereich bzw. zwischen dem jeweiligen Schneidbereich und dem Anschlussbereich vorgesehen.

Wenn der Schneidbereich im Betrieb auf ein Hindernis, wie beispielsweise einen Pfahl oder Stein trifft, wirkt die durch das getroffene Objekt aufgebrachte Kraft zuerst auf den Schneidbereich und wird dann an den Verformungsbereich weitergeleitet. Wenn die Kraft groß genug ist, wird der Verformungsbereich den Antrieb bzw. das Getriebe schützen, indem er die gesamte oder Teile der Kraft absorbiert. Die Kraftmenge, welche notwendig ist, um den Verformungsbereich zu verbiegen bzw. zu verformen, steht in Bezug zu der Kraft, welche verteilt bzw. von dem Antrieb oder dem Getriebe abgeleitet wird. Wenn die durch das getroffene Objekt erzeugte Kraft verhältnismäßig groß ist, wird die Trenneinrichtung eine relativ erhebliche Verformung des Verformungsbereichs erfahren und die Trenneinrichtung kann möglicherweise weiter rotieren. Eine Bedienperson wird die Verformung der Trenneinrichtung aufgrund des uneinheitlichen Schnittbildes, eines Auftretens von Lärm, welcher entsteht, wenn die Trenneinrichtung an ein Mähwerksgehäuse schlägt, oder durch einen Anstieg der Vibration eines Führungsholms, Griffs, Pedals oder eines Fahrzeugsrahmens bemerken. Die Bedienperson kann die verformte Trenneinrichtung dann ersetzen und den Mähbetrieb ohne oder bei einer nur geringen Beschädigung des Antriebs bzw. des Getriebes fortsetzen.

Eine derartige Trenneinrichtung ist verhältnismäßig starr und stabil und kann daher eine gleichmäßige Schnittqualität erzeugen, sich aber auch verformen, wenn ein Hindernis getroffen wird. Darüber hinaus wird die Anzahl an Einzelteilen oder Befestigungsmitteln verringert, welche sich beim Auftreffen auf ein Hindernis verformen oder verbiegen können.

In der Zeichnung sind nachfolgend näher beschriebene Ausführungsbeispiele der Erfindung dargestellt. Es zeigt:
- Fig. 1: eine Seitenansicht eines Geräts zur Rasen-, Garten- und Grundstückspflege in der Art eines handgeführten oder -geschobenen Rasenmähers mit einer Trenneinrichtung,
- Fig. 2: eine vergrößerte Seitenansicht der Trenneinrichtung und eines Antriebsgetriebes,
- Fig. 3: eine Seitenansicht eines Geräts zur Rasen-, Garten- und Grundstückspflege in der Art eines Rasentraktors mit einer Trenneinrichtung,
- Fig. 4: eine vergrößerte Seitenansicht der Trenneinrichtung gemäß Fig. 3 und eines entsprechenden Antriebsgetriebes,

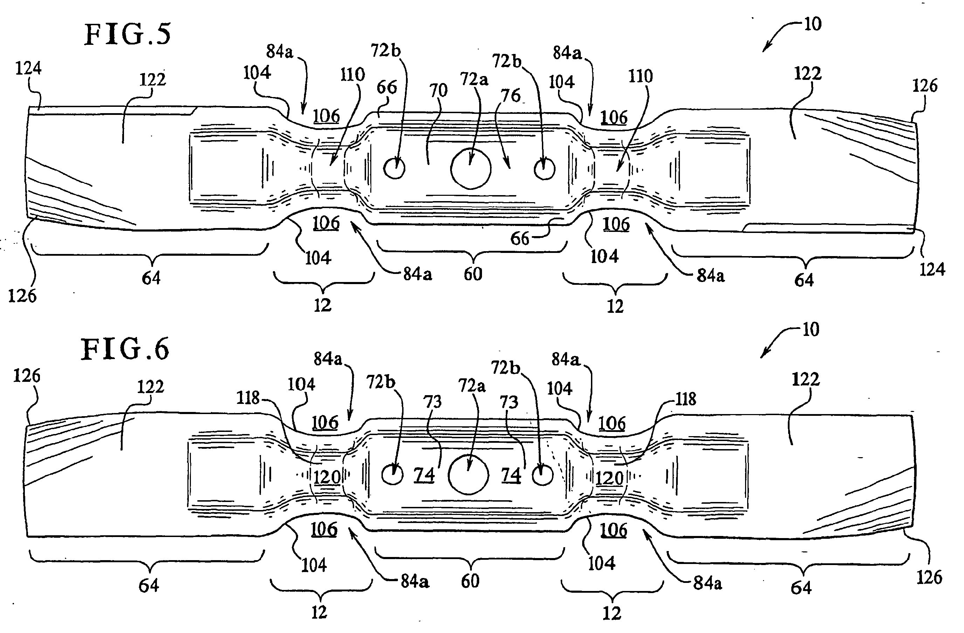

- Fig. 5: eine Ansicht der Trenneinrichtung von oben,
- Fig. 6: eine Ansicht der Trenneinrichtung von unten,
- Fig. 7: eine perspektivische Ansicht der Trenneinrichtung von oben,
- Fig. 8: einen Schnitt durch einen Verformungsbereich der Trenneinrichtung entlang der Linie 8 - 8 aus Fig. 7,
- Fig. 9A: eine Ansicht der Trenneinrichtung in Überlagerung mit einem gleichförmigen Umriss zur Darstellung des Unterschieds,
- Fig. 9B: eine Seitenansicht gemäß Fig. 9A,
- Fig. 10A: eine Ansicht eines Verformungsbereichs in einer zweiten Ausführungsform von oben betrachtet,
- Fig. 10B: eine Seitenansicht gemäß Fig. 10A,
- Fig. 11A: eine Ansicht eines Verformungsbereichs gemäß einer dritten Ausführungsform der Erfindung von oben betrachtet,
- Fig. 11B: eine Seitenansicht gemäß Fig. 11A,
- Fig. 12A: eine Ansicht einer weiteren Ausführungsform eines Verformungsbereichs von oben und
- Fig. 12B: eine Seitenansicht gemäß Fig. 12A.

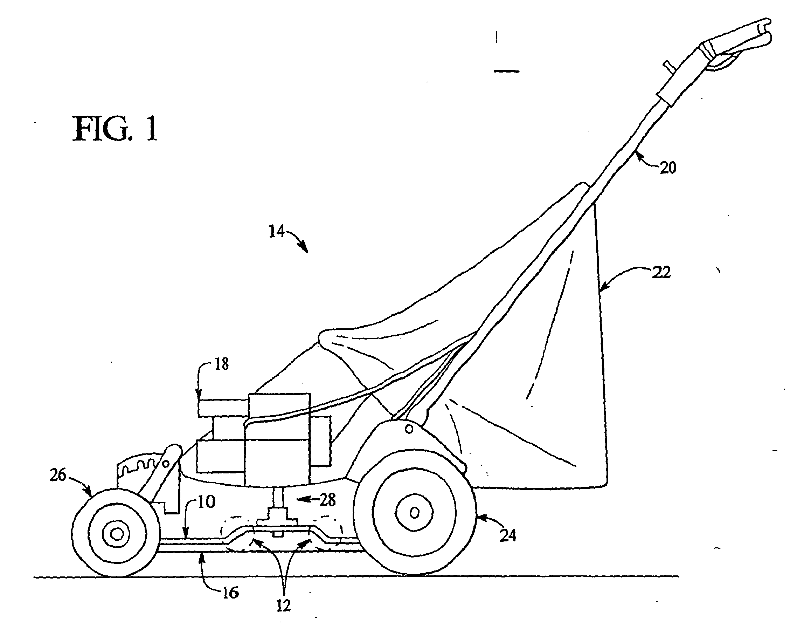

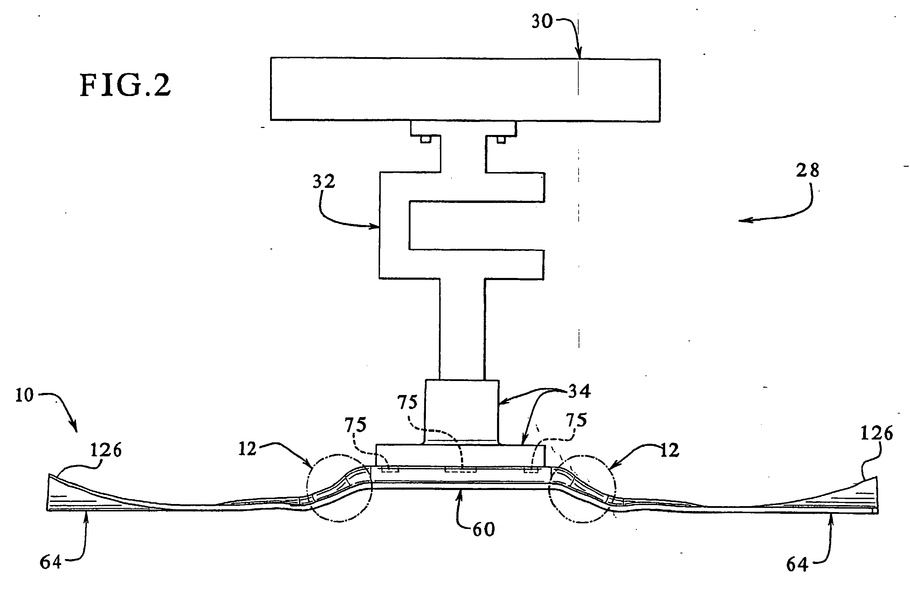

Die Figuren 1 und 2 zeigen eine Ausführungsform eines Mähmessers bzw. eines Messerbalkens, welcher nachfolgend als Trenneinrichtung 10 bezeichnet wird, die die im Folgenden beschriebenen Energieableitbereiche bzw. Verformungsbereiche 12 aufweist und die an einem handgeführten bzw. handgeschobenen Rasenmäher bzw. einem Mähgerät oder einem Gerät 14 zur Rasen-, Garten- und Grundstückspflege angebracht ist. In dieser Ausführungsform weist das Gerät 14 einen Rahmen 16, welcher einen Motor 18 trägt, einen Griff 20, eine Sammeleinrichtung 22, in der Art eines Fangsacks, eine Mehrzahl hinterer Räder 24, welche mit dem Rahmen 16 drehbar verbunden sind, und ein Getriebe 28 auf, welches den Motor 18 mit dem Messerbalken 10 verbindet.

Das Getriebe 28 weist eine Schwungscheibe 30, welche mit dem Motor 18 verbunden ist und mit diesem rotiert, eine Kurbel- bzw. Antriebswelle 32, welche mit der Schwungscheibe 30 verbunden ist und ein Befestigungs- oder Sicherungselement 34 auf, welches die Antriebswelle 32 mit der Trenneinrichtung 10 verbindet.

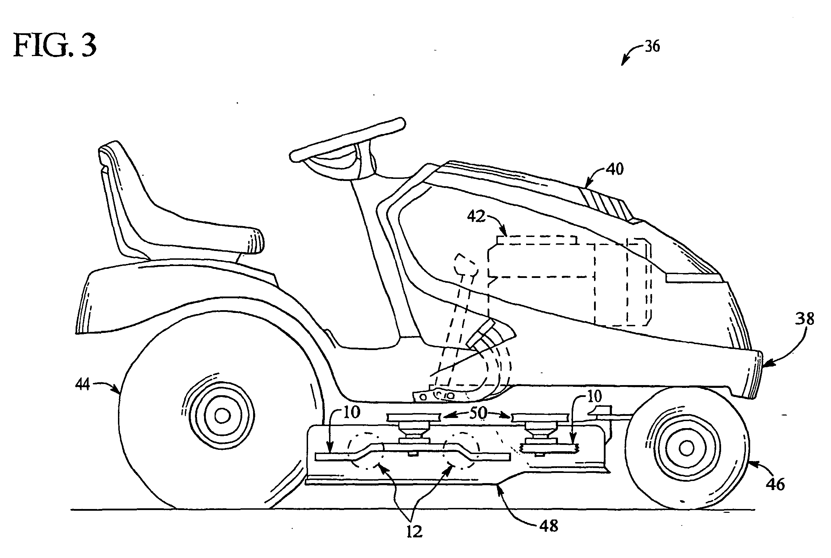

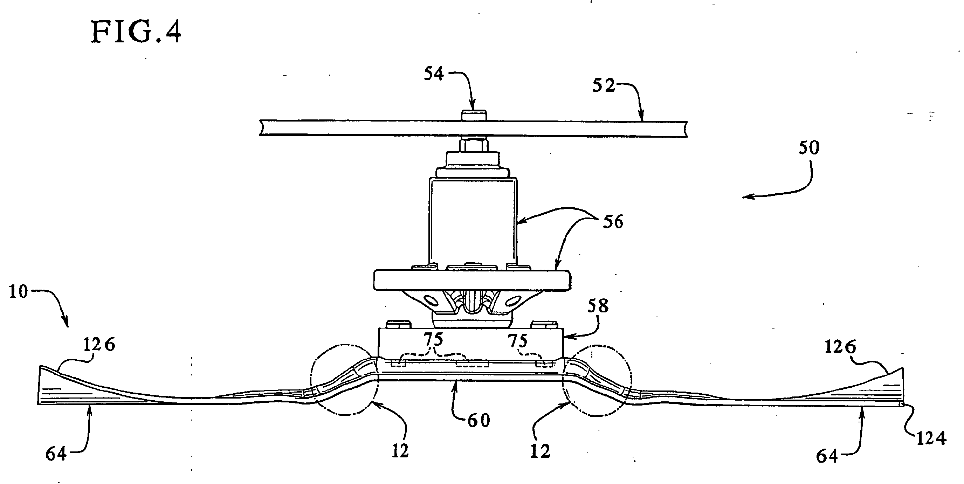

In einer weiteren Ausführungsform, welche in den Figuren 3 und 4 dargestellt ist, ist die Trenneinrichtung 10 der vorliegenden Erfindung an einem Gerät 36 angebracht, welches in der Art eines Rasentraktors bzw. eines Aufsitzmähers ausgestaltet ist. Das Gerät 36 gemäß dieser Ausführungsform weist einen Rahmen 38, welcher ein Chassis 40 und einen Motor 42 trägt, eine Mehrzahl hinterer, antreibbarer Räder 44, welche mit dem Rahmen 38 drehbar verbunden sind, eine Mehrzahl vorderer Räder 46, welche mit dem Rahmen 38 drehbar verbunden sind, ein Mähwerk 48, das durch den Rahmen 38 getragen wird, und einen Antriebszusammenbau bzw. ein Getriebe 50 auf, welches Leistung von dem Motor 42 zu den Messerbalken 10 überträgt.

Das Getriebe 50 weist vorzugsweise einen Antriebsriemen (nicht gezeigt), welcher mit dem Motor 42 verbunden ist und durch diesen angetrieben wird, eine Riemenscheibe 52, welche in den Antriebsriemen eingreift und durch diesen angetrieben wird, eine Antriebsspindel oder -welle 54, die mit der Riemenscheibe 52 verbunden ist, ein Spindelgehäuse 56, welches die Antriebswelle 54 beherbergt, und ein Befestigungs- oder Sicherungsmittel 54 auf, welches die Antriebswelle 54 mit der Trenneinrichtung 10 verbindet.

Die Trenneinrichtung 10 weist gemäß der vorliegenden Erfindung eine Energieabsorptionsstruktur auf, welche die Kraftmenge verringert, welche von einem getroffenen Objekt an das Getriebe 28, 50 des Geräts 14, 36 oder jeder anderen Art von Mähmaschine übertragen wird. In einer Ausführungsform weist die Trenneinrichtung 10 einen Getriebenschlussbereich bzw. einem Anschlussbereich 60 zur Verbindung der Trenneinrichtung 10 mit dem Getriebe 28 oder 50, zumindest einen und vorzugsweise eine Mehrzahl von Energie verteilenden Verformungsbereichen 12 und zumindest eine und vorzugsweise eine Mehrzahl von Schneidbereichen 64 auf. Die Trenneinrichtung 10 ist vorzugsweise einteilig ausgebildet, wobei der Anschlussbereich 60, der Verformungsbereich 12 und der Schneidbereich 64, einen integrierten, einheitlichen Körper bilden.

In der dargestellten Ausführungsform weist der Messerbalken 10 zwei Schneidbereiche 64 auf, welche um eine vertikale Achse rotieren, die sich durch den Anschlussbereich 60 erstreckt. In anderen, nicht illustrierten Ausführungsformen, kann die Trenneinrichtung 10 gemäß der vorliegenden Erfindung nur einen Schneidbereich und einen Verformungsbereich aufweisen, in welchem Fall der einzige Schneidbereich um eine vertikale Achse rotiert, welche sich durch den Anschlussbereich erstreckt.

Der Anschlussbereich 60 weist vorzugsweise zwei Schneidbereiche 64, eine angeflanschte unter Fläche 66, eine Mehrzahl von Seitenwänden 68, welche vorzugsweise abgerundet und mit der unteren Fläche 66 verbunden sind und sich von dieser nach oben erstrecken, eine obere Fläche 70, welche im Wesentlichen flach ist und die zumindest eine und vorzugsweise eine Mehrzahl von Sicherungsaussparungen 72a und 72b bestimmen, und eine Innenfläche 73 auf, welche eine Öffnung oder einen Freiraum 74 bestimmt. Vorzugsweise weist die Sicherungsaussparung eine zentrale Sicherungsaussparung 72a und eine Mehrzahl seitlicher Sicherungsaussparungen 72b auf. Die Sicherungsaussparungen 72a und 72b nehmen Sicherungsschrauben oder andere geeignete Sicherungsmittel 75 auf, welche den Anschlussbereich 60 mit dem Sicherungselement 34 oder 58 des Getriebes 28 oder 50 entsprechend verbinden. Die Wände 68, wie sie mit den unteren Flächen 66 und den oberen Flächen 70 verbunden sind, bestimmen eine Versteifungsstruktur oder eine Versteifung 76, welches eine Verformung der Trenneinrichtung 10 entlang einer vertikalen Achse verringert. Vorzugsweise hat der Anschlussbereich 60 eine im Wesentlichen kuppelartige Gestalt bzw. die Form einer nach unten geöffneten Tasse oder eines nach unten geöffneten Huts.

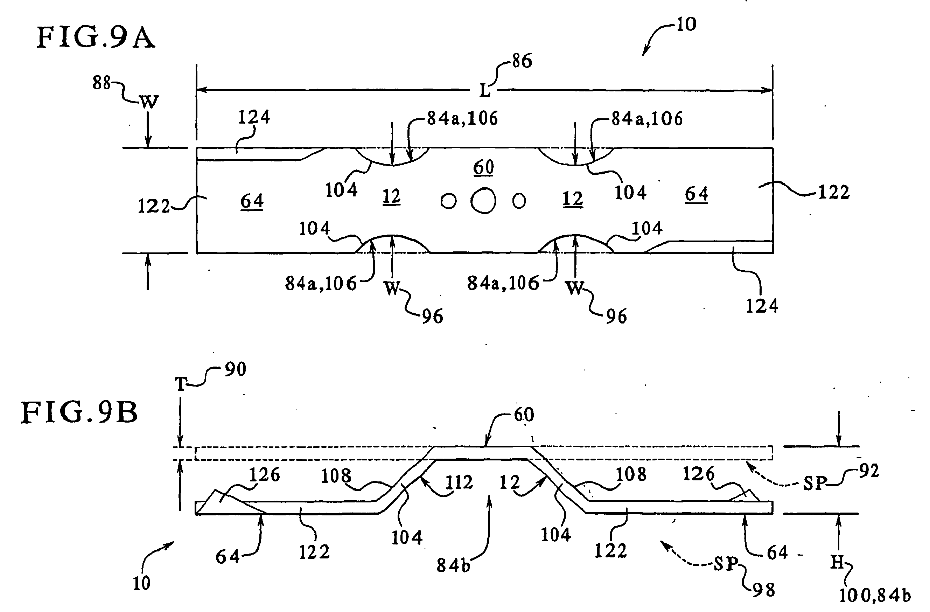

Der Verformungsbereich 12 weist oder bestimmt andererseits zumindest eine und vorzugsweise eine Mehrzahl von Uneinheitlichkeiten, Unstetigkeiten oder geometrischen Unregelmäßigkeiten 84a und 84b in der Trenneinrichtung 10. Mit Bezug auf Fig. 9 wird eine gleichmäßige oder einheitliche Form einer Trenneinrichtung in unterbrochenen Linien dargestellt, welche eine Länge (L) 86, eine Breite (W) 88, eine Dicke (T) 90 und ein Seitenprofil (SP) 92 zeigt. Bei solch einer gleichförmigen Gestalt ändern sich die Breite 88, die Dicke 90 und das Seitenprofil 92 über die Länge 86 nicht.

Im Gegensatz hierzu weisen die geometrischen Unregelmäßigkeiten 84a und 84b der Verformungsbereiche 12 bei der Trenneinrichtung 10 vorzugsweise eine Mehrzahl verschiedener Breiten (W) 88 und (W) 96 und Seitenprofile (SP) 98 auf, welche eine Höhe (H) 100 bestimmen, welche als Unregelmäßigkeiten 84b wirken, die sich entlang der Länge (L) 86 der Trenneinrichtung 10 ändern. Jede geometrische Unregelmäßigkeit 84 und 84b ermöglicht die Deformation des Verformungsbereichs 12, wenn die Trenneinrichtung 10 eine Stossbeanspruchung oder eine Kraft durch ein getroffenes Objekt erfährt.

Es ist zu bevorzugen, dass die geometrische Unregelmäßigkeit 84a eine eingeschnittene Wand 104 aufweist, welche eine Verjüngung 106 bestimmt. Die Verjüngung 106 kann jede passende Gestalt einnehmen, obwohl die Verjüngung 106 vorzugsweise abgerundet oder U-förmig ist oder anderweitig eine Bogen- oder Parabelform aufweist. Darüber hinaus ist es vorzuziehen, dass die geometrische Unregelmäßigkeit 84b durch eine Rampe oder einen gebogenen Bereich 108, der sich von dem Anschlussbereich 60 nach unten zu dem Schneidbereich 64 erstreckt, bestimmt wird. Der gebogene bzw. abgewinkelte Bereich 108 bewirkt, dass die obere Fläche 82 des Anschlussbereichs 60 in einer Ebene liegt, welche von der Ebene, in der der Schneidbereich 64 liegt, beabstandet ist. Der Abstand zwischen der Ebene des Anschlussbereichs 60 und des Schneidbereichs 64 bestimmt den Abstand oder die Höhe (H) 100, welche eine Verformung des Verformungsbereichs 12 ermöglicht. Im Besonderen ist es beabsichtigt, dass der gebogene oder abgewinkelte Bereich 108 einen Hebelarm aufweist, auf den eine Kraftlinie von einem getroffenen Objekt wird. Dieser Hebelarm ermöglicht ein Aufwölben und Nachgeben des Verformungsbereichs 12.

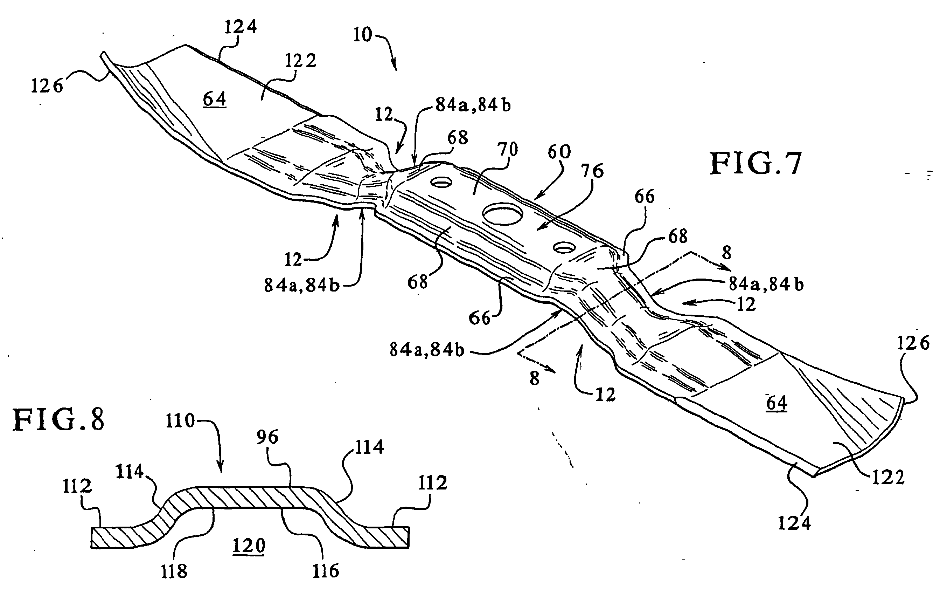

Wie es am Besten in den Figuren 7 und 8 dargestellt wird, weist der Verformungsbereich 12 vorzugsweise auch ein Element bzw. eine Versteifung 110 und eine weitere geometrische Unregelmäßigkeit, welche Steifigkeit und Starrheit für den Verformungsbereich 12 zur Verfügung stellt, auf. Die Versteifung 110 weist eine angeflanschte untere Fläche 112, eine Mehrzahl von Wänden 114, welche vorzugsweise abgerundet, mit der unteren Fläche 112 verbunden sind und sich von dieser nach oben erstrecken, eine obere Fläche 96, welche vorzugsweise abgerundet und mit den Wänden 114 verbunden ist, und eine Innenfläche 116 auf, welche einen Hohlraum 120 bestimmt. Vorzugsweise versieht die Versteifung 110 den Verformungsbereich 12 mit einer nach unten offenen U-Form oder einer Kuppelgestalt.

Der Schneidbereich 64 der Trenneinrichtung 10 weist eine im Wesentlichen ebene Fläche 122 mit einer vorgewählten Breite (W) 88 und Länge auf. Wie es oben beschrieben wurde, ist die Breite 88 größer als die minimale Breite (W) 96 des Verformungsbereichs 12. Die Breite (W) 88 des Schneibereichs 64 kann, obwohl sie derart dargestellt ist, dass sie im Wesentlichen der Breite des Anschlussbereichs 64 entspricht, jede vorgewählte Größe aufweisen, welche für den Schneidzweck passend ist. Der Schneidbereich 64 weist eine Schnittkante 124, welche vorzugsweise zum Zweck des Schneidens von Gras und anderem Material nach unten abgewinkelt ist, und ein Schnittunterstützungselement bzw. einen Flügel 126, welcher vorzugsweise durch eine gebogene Kante der Fläche 122 gebildet wird.

Der Flügel 126 kann bestimmte Luftströmungen und durch Luft erzeugte das Schnittgut während des Betriebs des Geräts 14, 36 anhebende Kräfte ermöglichen. In einer Ausführungsform ermöglicht der Flügel 126 ein Mulchen des Schnittgutes. Es sollte deutlich werden, dass die Trenneinrichtung 10 gemäß der vorliegenden Erfindung keinen Flügel 126 aufweisen muss.

Vorzugsweise ist die Trenneinrichtung 10 aus einer/einem Stahltafel oder -körper gefertigt, welche/welcher eine im Wesentlichen einheitliche Dicke aufweist. Die Trenneinrichtung 10 ist vorzugsweise entweder aus heiß- oder kaltgewalztem Tafel- oder Bandmaterial hergestellt. Bei dem Material der Trenneinrichtung 10 handelt es sich vorzugsweise um einen hochgradigen Kohlenstoff- oder einen Legierungsstahl mit einer Zugfestigkeit in einem Bereich von 960 bis 1800 MPa und einer Streckgrenze in dem Bereich zwischen 700 bis 1500 MPa. In einem Ausführungsbeispiels weist der Stahl eine Zugfestigkeit von 1400 MPa und eine Streckgrenze von 1089 MPa auf.

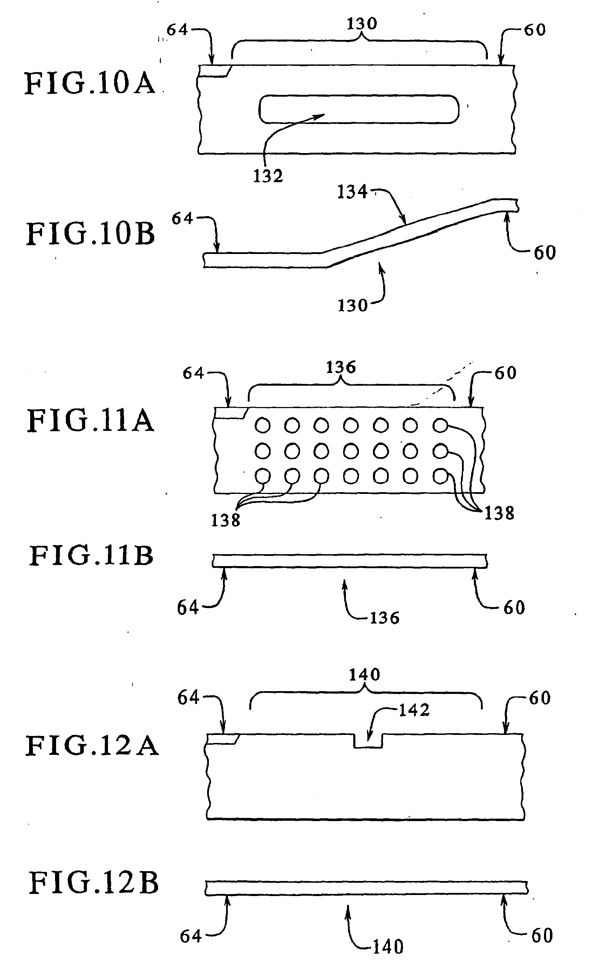

Es sollte klar sein, dass der energieableitende Verformungsbereich gemäß der vorliegenden Erfindung von jeder passenden Bauart sein kann, welche eine oder mehrere geometrische Unregelmäßigkeiten bestimmt. Beispielweise bestimmt der Verformungsbereich 130 in der in den Figuren 10A und 10B gezeigten Ausführungsform eine im Wesentlichen rechteckige Leerstelle oder Aussparung 132 und eine Rampe oder einen gebogenen oder abgewinkelten Bereich 134, welcher sich von dem Anschlussbereich 60 nach unten zu dem Schneidbereich 64 erstreckt. In einer anderen Ausführungsform, welche in den Figuren 11A und 11B dargestellt wird, bestimmt der Verformungsbereich 136 eine Mehrzahl runder Leerstellen oder Aussparungen 138. In der in den Fig. 12A und 12B gezeigten Ausführungsform, bestimmt der Verformungsbereich 140 eine einzelne, rechteckige Kerbe 142.

Diese Verformungsbereiche 12, 130, 136, 140 der vorliegenden Erfindung versehen die Trenneinrichtung 10 mit Eigenschaften, welche eine Verformung der Trenneinrichtung 10 ermöglichen, wenn die Trenneinrichtung 10 unter einer bestimmten Belastung steht. Vorzugsweise verringern die geometrischen Unregelmäßigkeiten in dem Verformungsbereich die Knickfestigkeit, erhöhen die Belastungskonzentration oder erfüllen beide Funktionen. Als Belastungssteigerer sammeln die geometrischen Unregelmäßigkeiten oder Unstetigkeiten Belastung in bestimmten Bereichen oder Zonen des Verformungsbereichs 12, 36, 136, 140. Bei Einsatz einer Ausführungsform treten, wenn der Schneidbereich 64 einen bestimmten Stoss erfährt, eine oder mehrere der folgenden Erscheinungen auf: Der Verformungsbereich 12, 130, 136, 140 erreicht seine maximale Knickfestigkeit, der Verformungsbereich knickt ab, der Verformungsbereich 12, 130, 136, 140 erreicht seine maximale Streckgrenze und/oder der Verformungsbereich 12 gibt nach.

In Einsatz einer Ausführungsform dreht oder rotiert die Trenneinrichtung 10 um eine vertikale Achse mit einer Häufigkeit, die durch den Motor des Geräts 14, 36 bestimmt wird. Die Versteifung 76 des Anschlussbereichs 60 und die Versteifung 110 des Verformungsbereichs 12 verhindern oder reduzieren eine Biegung in der Trenneinrichtung 10 entlang einer vertikalen Achse. Darüber hinaus verhindern oder reduzieren die Versteifungen 76 und 110 die Verformung der Trenneinrichtung 10 als Reaktion auf normale Schneidkräfte von Gras oder anderem zum Mähen geeigneten Material.

Wenn eine Bedienperson bewirkt, dass einer der Mähbereiche 64 der Trenneinrichtung 10 ein Hindernis, wie einen Stahlpfahl, einen Stein oder andere verhältnismäßig steife Gegenstände, trifft, erfährt der Schneidbereich 64 eine Kraft oder einen Stoss. Dieser Stoss wird an den Verformungsbereich 12 zwischen dem Schneidbereich 64 und dem Anschlussbereich 60 übertragen. Der Verformungsbereich 12 wirkt als ein Energieverteilungselement, welches Teile von oder die ganze Kraft des getroffenen Objekts zerstreut und absorbiert. Mit anderen Worten bestimmt der Verformungsbereich 12 einen Energieabsorptionsbereich, welcher sich in Folge des Aufschlags verformt. Entsprechend wird ein Teil der Kraft und Energie des getroffenen Objekts durch den Verformungsbereich 12 absorbiert, anstatt an das Getriebe 28, 50 des Geräts 14, 36 übertragen zu werden. Daher wird das Getriebe 28, 50 nicht verformt oder die Verformung ist gering, wenn das Getriebe 28, 50 verformt wird.

Darüber hinaus verformt sich der Verformungsbereich 12 in Abhängigkeit von der Stärke des Aufpralls vorzugsweise in solchem Umfang, dass der Schneidbereich 64 sich aus einer Vordem-Auftreffen- bzw. unverformten Stellung in eine Nach-dem-Auftreffen oder verformte Stellung bewegt. In der verformten Stellung bewirkt der Schneidbereich 64 eine Veränderung der Trenneinrichtung oder ein Funktionsanzeichen. Solch ein Anzeichen informiert die Bedienperson, dass die Trenneinrichtung 10 ein Hindernis getroffen hat oder dass die Trenneinrichtung 10 anderweitig überprüft oder ersetzt werden sollte. In einem Beispiel wird das Anzeichen durch ein ungleichförmiges Schnittbild gebildet, welches für die Bedienperson sichtbar ist. In einem anderen Beispiel ist das Anzeichen ein Geräusch, welches durch den Kontakt des Schneidbereichs 64 und dem Mähwerk oder anderen Bereichen des Geräts 14, 36 entsteht. In einer weiteren Ausführungsform ist das Anzeichen in einer Vibrationssteigerung des Führungsholms, des Lenkrads, der Pedale oder des Rahmens des Geräts 14, 36 zu sehen.

Es sollte klar sein, dass die Trenneinrichtung 10 gemäß der vorliegenden Erfindung an jeder Art von Mähgerät, einschließlich aber nicht abschließend an Mähgeräten wie handgeführten oder handgeschobenen Rasenmähern, Aufsitzmähern, Traktoren oder Rasentraktoren mit vorderen, seitlichen und/der hinteren Mähwerken oder anderen Arten von Traktoren und handbetätigten in der Hand gehaltenen Arbeitgeräten oder Motorarbeitsgeräten, wie Rasenkantenschneidern und Motorsensen eingesetzt werden kann. Darüber hinaus muss die Trenneinrichtung 10 nicht wirksam mit einem Getriebe 28 oder 50 verbunden sein bzw. durch ein solches angetrieben werden. Die Trenneinrichtung 10 entsprechend der vorliegenden Erfindung kann mit jeder Art von Antriebsmechanismus, -zusammenbau oder Getriebe verbunden sein, welches/welcher Bewegung an einen Messerbalken bzw. eine Trenneinrichtung 10 überträgt. In Abhängigkeit von der Art des Geräts 14, 36, kann die Trenneinrichtung 10 daran angepasst sein, um eine Achse zu rotieren, welche sich durch den Anschlussbereich erstreckt, einschließlich aber nicht abschließend einer vertikalen Achse oder einer horizontalen Achse.

Die Trenneinrichtung 10 der vorliegenden Erfindung weist in einer Ausführungsform einen einteiligen Körper mit einer Mehrzahl von Verformungsbereichen auf, um eine Verformung der Trenneinrichtung zu ermöglichen, wenn die Trenneinrichtung einen Stoss oder eine Belastung durch ein getroffenes Objekt erfährt. Diese Art von Trenneinrichtung reduziert den Schaden an Getrieben von Geräten zur Rasen-, Garten- bzw. Grundstückspflege.

Es sollte deutlich sein, dass verschiedene Änderungen und Modifikationen an der im Moment bevorzugten Ausführungsform, welche hier beschrieben wurde, für den Fachmann offenkundig sein werden.

## Patentansprüche

1. Trenneinrichtung (10) mit einem Korpus, welcher zumindest einen Anschlussbereich (60) und einen Schneidbereich (64) aufweist, wobei zwischen dem Schneidbereich (64) und dem Anschlussbereich (60) ein Verformungsbereich (12, 130, 136, 140) vorgesehen ist, **dadurch gekennzeichnet, dass** der Verformungsbereich (12, 130, 136, 140) wenigstens teilweise eine Breite (W, 96) aufweist, welche von der Breite (W, 88) des Anschlussbereichs (60) bzw. des Schneidbereichs (64) abweicht.

2. Trenneinrichtung nach Anspruch 1, **dadurch gekennzeichnet, dass** der Verformungsbereich (12, 130, 136, 140) Energie ableitet bzw. in dem Korpus verteilt.

3. Trenneinrichtung nach Anspruch 1 oder 2, **dadurch gekennzeichnet, dass** der Verformungsbereich (12, 130, 136, 140) wenigstens eine geometrische Unregelmäßigkeit (84) aufweist.

4. Trenneinrichtung nach Anspruch 3, **dadurch gekennzeichnet, dass** die geometrischen Unregelmäßigkeit (84) zumindest eine Kerbe (142) bzw. Verjüngung (106), Aussparung (132, 138) oder einen abgewinkelten Bereich (134) aufweist und/oder zumindest im Wesentlichen bogenförmig bzw. rampenartig ausgebildet ist.

5. Trenneinrichtung nach einem oder mehreren der vorherigen Ansprüche, **dadurch gekennzeichnet, dass** zumindest der Schneidbereich (64) und der Anschlussbereich (60) in unterschiedlichen Ebenen angeordnet sind.

6. Trenneinrichtung nach einem oder mehreren der vorherigen Ansprüche, **dadurch gekennzeichnet, dass** sich der Verformungsbereich (12, 130, 136, 140) von dem Anschlussbereich (60) zu dem Schneidbereich (64) erstreckt.

7. Trenneinrichtung nach einem oder mehreren der vorherigen Ansprüche, **dadurch gekennzeichnet, dass** die Trenneinrichtung (10) zumindest im Wesentlichen einteilig ausgebildet ist und/oder aus einem einheitlichen Material besteht.

8. Trenneinrichtung nach einem oder mehreren der vorherigen Ansprüche ausgebildet als ein Messerbalken.

9. Trenneinrichtung nach einem oder mehreren der vorherigen Ansprüche ausgebildet zur Verwendung an einem Gerät (14, 36) zur Rasen-, Garten- bzw. Grundstückspflege.

## Claims

1. Cutting device (10) having a body which has at least a coupling section (60) and a cutting section (64), a deformation section (12, 130, 136, 140) being provided between the cutting section (64) and the coupling section (60), **characterised in that** the deformation section (12, 130, 136, 140) has at least in parts a width (W, 96) which differs from the width (W, 88) of the coupling section (60) or of the cutting section (64).

2. Cutting device according to claim 1, **characterised in that** the deformation section (12, 130, 136, 140) dissipates energy or distributes it in the body.

3. Cutting device according to claim 1 or 2, **characterised in that** the deformation section (12, 130, 136, 140) has at least one geometrical irregularity (84).

4. Cutting device according to claim 3, **characterised in that** the geometrical irregularity (84) has at least a notch (142) or taper (106), a recess (132, 138) or an angled region (134) and/or is designed at least substantially arcuate or ramp-like.

5. Cutting device according to one or more of the preceding claims, **characterised in that** at least the cutting section (64) and the coupling section (60) are arranged in different planes.

6. Cutting device according to one or more of the preceding claims, **characterised in that** the deformation section (12, 130, 136, 140) extends from the coupling section (60) to the cutting section (64).

7. Cutting device according to one or more of the preceding claims, **characterised in that** the cutting device (10) is designed at least substantially as one piece and/or consists of a uniform material.

8. Cutting device according to one or more of the preceding claims, designed as a cutter bar.

9. Cutting device according to one or more of the preceding claims, designed to be used on an appliance (14, 36) for the care of a lawn, a garden or a piece of land.

## Revendications

1. Dispositif de coupe (10) comportant un corps, qui comporte au moins une zone de raccordement (60) et une zone de coupe (64), une zone de déformation (12, 130, 136, 140) étant prévue entre la zone de coupe (64) et la zone de raccordement (60), **caractérisé en ce que** la zone de déformation (12, 130, 136, 140) a au moins en partie une largeur (W, 96) qui est différente de la largeur (W, 88) de la zone de raccordement (60) et de la zone de coupe (64).

2. Dispositif de coupe selon la revendication 1, **caractérisé en ce que** la zone de déformation (12, 130, 136, 140) évacue l'énergie ou la répartit dans le corps.

3. Dispositif de coupe selon la revendication 1 ou 2, **caractérisé en ce que** la zone de déformation (12, 130, 136, 140) comporte au moins une irrégularité géométrique (84).

4. Dispositif de coupe selon la revendication 3, **caractérisé en ce que** la irrégularité géométrique (84) comporte au moins une entaille (142) ou un rétrécissement (106), un évidement (132, 138) ou une zone coudée (134) et/ou est réalisée au moins sensiblement sous forme de courbe ou de rampe.

5. Dispositif de coupe selon une ou plusieurs des revendications précédentes, **caractérisé en ce qu'**au moins la zone de coupe (64) et la zone de raccordement (60) sont disposées dans des plans différents.

6. Dispositif de coupe selon une ou plusieurs des revendications précédentes, **caractérisé en ce que** la zone de déformation (12, 130, 136, 140) s'étend depuis la zone de raccordement (60) vers la zone de coupe (64).

7. Dispositif de coupe selon une ou plusieurs des revendications précédentes, **caractérisé en ce que** le dispositif de coupe (10) est conçu au moins sensiblement d'un seul tenant et/ou est réalisé dans un matériau homogène.

8. Dispositif de coupe selon une ou plusieurs des revendications précédentes, conçu sous forme de barre de coupe.

9. Dispositif de coupe selon une ou plusieurs des revendications précédentes, conçu pour être utilisé sur une machine (14, 36) destinée à l'entretien des pelouses, des jardins ou terrains.
